# EUROPEAN PATENT APPLICATION

(11) **EP 4 424 551 A1**
(43) Date of publication of application: **04.09.2024**
(21) Application number: 23164612.6
(22) Date of filing: 28.03.2023
(51) Int. Cl.: B60L 58/13

(54) **METHOD AND SYSTEM FOR SELECTING A CHARGING STATION FOR CHARGING AN ELECTRIC VEHICLE**

(30) Priority: 28.02.2023 IN 202321013506
(71) Applicant: Tata Motors Passenger Vehicles Limited, Mumbai 400001 (IN)
(72) Inventor: EDWARDS, Gary, London, SW1X 7HS (GB)
(74) Representative: Grünecker Patent- und Rechtsanwälte PartG mbB

(57) **Abstract**

A method and system for selecting a charging station for charging an electric vehicle are disclosed. The method may include obtaining a first data set including a predefined temperature of the cells of the battery for a future point-in-time and a second data set including a predefined state-of-charge of the cells of the battery for the future point-in-time. The method further includes analyzing the first data set and the second data set with respect to the future point-in-time and obtaining a future point-in-time of arrival of the electric vehicle at one or more charging stations. The method further includes predicting a charging rate of the battery at the future point-in-time of arrival of the electric vehicle at the one or more charging stations based on the analysis and selecting a charging station for charging the electric vehicle, based on the predicted charging rates.

## Description

### Technical Field

This disclosure relates generally to charging of battery electric vehicles, and more particular to a method and a system for optimizing the charging of the electric vehicle and selecting a charging station for charging an electric vehicle.

### BACKGROUND

There has been a steep rise in the ownership of Battery Electric Vehicles (BEV) and an increased demand for rapid charging of the batteries of these vehicles. However, there has also been some disquiet amongst customers about the disparity between the high charging rates as claimed by the manufacturers and the actual charging rates experienced by the customers. This is largely because Lithium-ion (Li-Ion) batteries accept charging at different rates based on their State-of-Charge (SoC), battery cell temperature, and age of the battery (internal resistance increases with age). Customers often have to learn to get their battery in a "sweet spot" which is typically 10-20% SoC and 30-40 °C battery cell temperature.

Some original equipment manufacturers (OEMs) allow a customer to choose where (i.e. a charging station) they want to charge their vehicle, via a navigation system and accordingly adjust the cooling system to ensure the battery is in the right temperature range to accept charge at the fastest rate. However, this is still not very transparent to the customer, assuming the customer has already programmed a destination to charge the vehicle in the navigation system.

There is, therefore, a need for a charging optimization solution that can advise the customer about the charging time or location, prior to a fast charge event so that the customer can feel engaged with the process, thereby reducing frustration.

### SUMMARY OF THE INVENTION

In an embodiment, a method of selecting a charging station for charging an electric vehicle is disclosed. The method may include obtaining a first data set associated with temperature of cells of a battery of the electric vehicle. The first data set may include a predefined temperature of the cells of the battery for a future point-in-time. The method may further include obtaining a second data set associated with a state-of-charge of the battery of the electric vehicle. The second data set may include a predefined state-of-charge of the cells of the battery for the future point-in-time. The method may further include analyzing the first data set and the second data set, with respect to the future point-in-time and obtaining a future point-in-time of arrival of the electric vehicle at each of one or more charging stations located in the vicinity of a current location of the electric vehicle. The method may further include predicting a charging rate of the battery at the future point-in-time of arrival of the electric vehicle at each of the one or more charging stations from the current location, based on the analysis and selecting a charging station from the one or more charging stations for charging the electric vehicle, based on the predicted charging rate of the battery associated with the one or more charging stations.

In another embodiment, a method of selecting a charging station for charging an electric vehicle is disclosed. The method may include obtaining a first data set associated with temperature of cells of a battery of the electric vehicle. The first data set may include a current temperature of the cells of the battery. The method may further include obtaining a second data set associated with a state-of-charge of the battery of the electric vehicle. The second data set may include a current state-of-charge of the cells of the battery. The method may further include analyzing the first data set and the second data set, and predicting a current charging rate of the battery, based on the analysis. The method may further include rendering a visual representation indicative of the predicted charging rate of the battery at the future point-in-time.

In yet another embodiment, a system for selecting a charging station for charging an electric vehicle is disclosed. The system includes a processor and a memory coupled with the processor. The memory stores processor-executable instructions, which on execution, cause the processor to obtain a first data set associated with temperature of cells of a battery of the electric vehicle. The first data set may include a predefined temperature of the cells of the battery for a future point-in-time. The processor-executable instructions further cause the processor to obtain a second data set associated with a state-of-charge of the battery of the electric vehicle. The second data set may include a predefined state-of-charge of the cells of the battery for the future point-in-time. The processor-executable instructions further cause the processor to analyze the first data set and the second data set, with respect to the future point-in-time and obtain a future point-in-time of arrival of the electric vehicle at each of one or more charging stations located in the vicinity of a current location of the electric vehicle. The processor-executable instructions further cause the processor to predict a charging rate of the battery at the future point-in-time of arrival of the electric vehicle at each of the one or more charging stations from the current location, based on the analysis and select a charging station from the one or more charging stations for charging the electric vehicle, based on the predicted charging rate of the battery associated with the one or more charging stations.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** is a block diagram of an exemplary system for selecting a charging station for charging an electric vehicle, in accordance with some embodiments of the present disclosure.
**FIG. 2** illustrates a block diagram of a charging station selection device showing one or more modules, in accordance with some embodiments.
**FIG. 3** illustrates a visual representation depicting a predicted charging rate of a battery, in accordance with some embodiments.
**FIG. 4** illustrates a visual representation depicting a predefined state-of-charge (SoC) of the cells of the battery, in accordance with some embodiments.
**FIG. 5** illustrates a visual representation depicting a predefined temperature of the cells of the battery, in accordance with some embodiments.
**FIG. 6** is a schematic diagram of a navigation map (as rendered on a display screen of the electric vehicle) along with visual representations depicting the predicted charging rate of the cells of the battery, in accordance with some embodiments.
**FIG. 7** is a flowchart of a method of optimizing charging of an electric vehicle, in accordance with some embodiments.
**FIG. 8A** is a flowchart of a method of selecting a charging station for charging an electric vehicle, in accordance with some embodiments.
**FIG. 8B** is a flowchart of another method of selecting a charging station for charging an electric vehicle, in accordance with some embodiments.
**FIG. 9** is a flowchart of a method of predicting the charging rate of the battery at the future point-in-time, in accordance with some embodiments.
**FIG. 10** is a flowchart of a method of optimizing charging of an electric vehicle for a current point-in-time, in accordance with some embodiments.

### DETAILED DESCRIPTION OF THE DRAWINGS

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims. Additional illustrative embodiments are listed below.

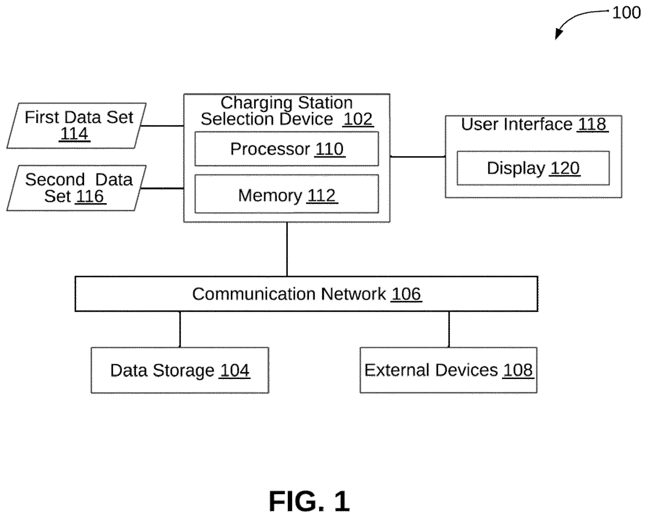

Referring now to **FIG. 1**, a block diagram of a system 100 for selecting a charging station for charging an electric vehicle is illustrated, in accordance with an embodiment of the present disclosure. The system 100 may implement a charging station selection device 102. Further, the system 100 may include a data storage 104. In some embodiments, the data storage 104 may store a first data set associated with temperature of cells of a battery, a second data set associated with a state-of-charge of the battery of the electric vehicle, etc. The charging station selection device 102 may be a computing device having data processing capability. Examples of the charging station selection device 102 may include, but are not limited to a microprocessor, a desktop, a laptop, a notebook, a netbook, a tablet, a smartphone, a mobile phone, an application server, a web server, or the like.

Additionally, the charging station selection device 102 may be communicatively coupled to an external device 108 for sending and receiving various data. Examples of the external device 108 may include, but are not limited to, a remote server, digital devices, an electronic control unit (ECU), and a computer system. In some embodiments, the charging station selection device 102 may be incorporated within the ECU, i.e. the ECU of the vehicle may perform the functions of the charging station selection device 102. The charging station selection device 102 may connect to the external device 108 over a communication network 106. The charging station selection device 102 may connect to external device 108 via a wired connection, for example via Universal Serial Bus (USB). A computing device, a smartphone, a mobile device, a laptop, a smartwatch, a personal digital assistant (PDA), an e-reader, and a tablet are all examples of external devices 108.

The charging station selection device 102 may be configured to perform one or more functionalities that may include obtaining a first data set 114 associated with temperature of cells of a battery of the electric vehicle. The first data set 114 may include a predefined temperature of the cells of the battery for a future point-in-time. The one or more functionalities may include obtaining a second data set 116 associated with a state-of-charge of the battery of the electric vehicle. The second data set 116 may include a predefined state-of-charge of the cells of the battery for the future point-in-time. The one or more functionalities may further include analyzing the first data set 114 and the second data set 116, with respect to the future point-in-time and obtain a future point-in-time of arrival of the electric vehicle at each of one or more charging stations located in the vicinity of a current location of the electric vehicle. The one or more functionalities may further include predicting a charging rate of the battery at the future point-in-time of arrival of the electric vehicle at each of the one or more charging stations from the current location, based on the analysis and selecting a charging station from the one or more charging stations for charging the electric vehicle, based on the predicted charging rate of the battery associated with the one or more charging stations. It should be noted that, in some embodiments, the first data set 114 may be obtained from a Battery Management System (BMS) of the electric vehicle. Further, the second data set 116 may be obtained from at least one of the BMS and Powertrain Control Module (PCM) of the electric vehicle.

To perform the above functionalities, the charging station selection device 102 may include a processor 110 and a memory 112. The memory 112 may be communicatively coupled to the processor 110. The memory 112 may store a plurality of instructions, which upon execution by the processor 110, cause the processor 110 to perform the above functionalities. The system 100 may further include a user interface 118 which may further implement a display 120. Examples may include, but are not limited to a display, keypad, microphone, audio speakers, vibrating motor, LED lights, etc. The display 120 may display an output of the computation performed by the charging station selection device 102.

In some embodiments, the charging station selection device 102 may be incorporated within the pre-existing infotainment system or a dashboard display unit of the automobile. In alternate embodiments, the charging station selection device 102 may exist separately from the pre-existing infotainment system or the dashboard display unit. The charging station selection device 102 may, therefore, generate and provide a signal to the pre-existing infotainment system or the dashboard display unit, for rendering a visual representation indicative of the predicted charging rate of the battery at a future point-in-time.

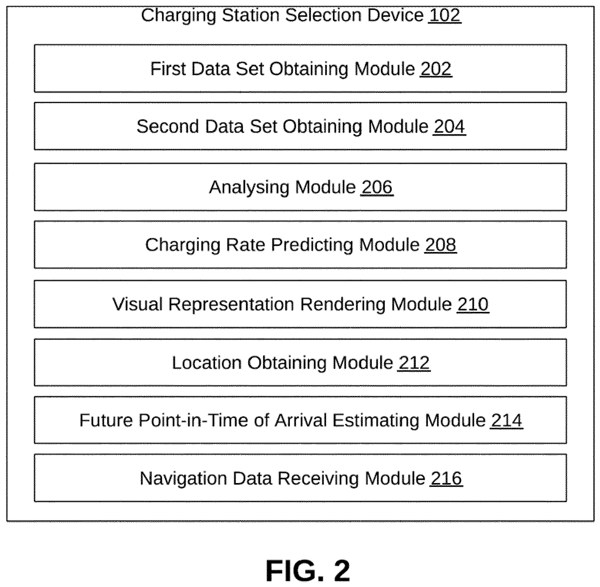

Referring now to **FIG. 2**, a block diagram of the charging station selection device 102 showing one or more modules is illustrated, in accordance with some embodiments. In some embodiments, the charging station selection device 102 may include a first data set obtaining module 202, a second data set obtaining module 204, an analyzing module 206, and a charging rate predicting module 208. Additionally, the charging station selection device 102 may include a visual representation rendering module 210. Further, in some embodiments, the charging station selection device 102 may include a location obtaining module 212, a future point-in-time of arrival estimating module 214, and a navigation data receiving module 216.

The first data set obtaining module 202 may obtain a first data set associated with temperature of cells of a battery of the electric vehicle. The first data set may include a predefined temperature of the cells of the battery for a future point-in-time. In some embodiments, the first data set may be obtained from a Battery Management System (BMS) of the electric vehicle. In other words, the BMS of the electric vehicle may be configured to fetch the current and predict temperature of the cells of the battery for multiple future points-in-time, for example, multiple future points-in-time in a predefined future period of time. As such, the first data set obtaining module 202 may be communicatively coupled with the BMS of the electric vehicle, in order to obtain the first data set associated with temperature of the cells of the battery of the electric vehicle.

In some embodiments, for example, when the vehicle with navigation feature is enroute a predefined destination, the first data set obtaining module 202 may obtain predefined temperature of the cells of the battery for multiple future points-in-time from the current time till the time of arrival at the predefined destination. Also, it may be noted that even when the destination is not predefined, the first data set obtaining module 202 may obtain predefined temperature of the cells of the battery for multiple future points-in-time for a future period of time. This future period of time may be configured by the manufacturer or the driver (or any other user) of the vehicle. As such, the BMS of the electric vehicle may be programmed to predict the temperature of the cells of the battery for the multiple future points-in-time from the current time till the time of arrival at the predefined destination (when the destination is predefined), or for multiple future points-in-time for a future period of time (when the destination is not predefined).

The second data set obtaining module 204 may obtain a second data set associated with a state-of-charge (SoC) of the battery of the electric vehicle. The second data set may include a predefined SoC of the cells of the battery for the future point-in-time. In some embodiments, the second data set may be obtained from at least one of the BMS and Powertrain Control Module (PCM) of the electric vehicle. The BMS or the PCM may be, therefore, configured to fetch the current and predict SoC of the cells of the battery for multiple future points-in-time, for example, multiple future points-in-time in a predefined future period of time. As such, the second data set obtaining module 204 may be communicatively coupled with the BMS and/or the PCM of the electric vehicle, in order to obtain the second data set associated with SoC of the cells of the battery of the electric vehicle.

Similar to the case of predefined temperature of the cells of the battery, the second data set obtaining module 204 may obtain predefined SoC of the cells of the battery for multiple future points-in-time from the current time till the time of arrival at the predefined destination, when the vehicle with navigation feature is enroute a predefined destination. Further, when the destination is not predefined, the second data set obtaining module 204 may obtain predefined SoC of the cells of the battery for multiple future points-in-time for a future period of time. The future period of time may be configured by the manufacturer or the driver (or any other user) of the vehicle. Therefore, the BMS or PCM of the electric vehicle may be programmed to predict the SoC of the cells of the battery for the multiple future points-in-time from the current time till the time of arrival at the predefined destination (when the destination is predefined), or for multiple future points-in-time for a future period of time (when the destination is not predefined).

The analyzing module 206 may analyze the first data set and the second data set, with respect to the future point-in-time. The location obtaining module 212 may obtain a future point-in-time of arrival of the electric vehicle at each of one or more charging stations located in the vicinity of a current location of the electric vehicle. The charging rate predicting module 208 may predict a charging rate of the battery at the future point-in-time of arrival of the electric vehicle at each of the one or more charging stations from the current location, based on the analysis. In other words, the charging rate predicting module 208 may predict the charging rate of the battery at the future point-in-time, based on the predefined temperature and the predefined SoC of the cells of the battery at the future point-in-time.

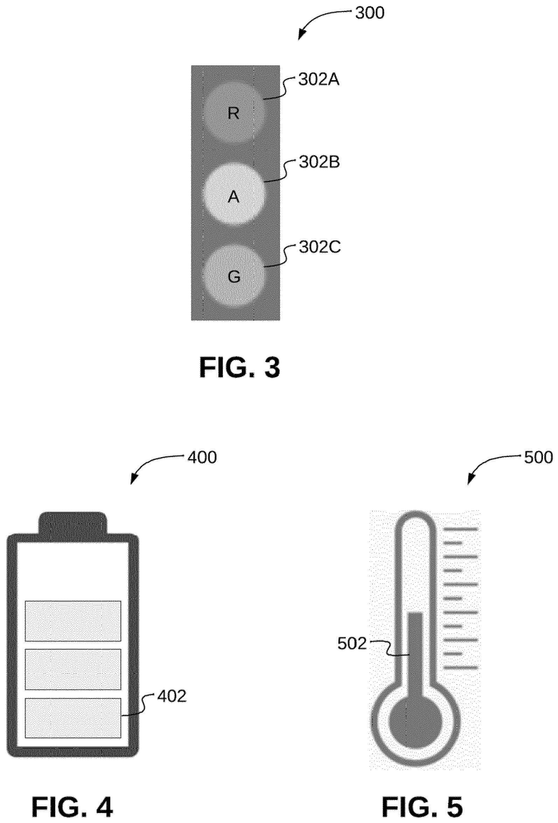

The visual representation rendering module 210 may render a visual representation indicative of the predicted charging rate of the battery at the future point-in-time. Additionally, the visual representation rendering module 210 may render a visual representation indicative of the predefined SoC and predefined temperature of the battery at the future point-in-time. The visual representations are further explained in conjunction with FIGs. 3-5.

Referring now to **FIG. 3** a visual representation 300 depicting the predicted charging rate of the battery is illustrated, in accordance with some embodiments of the present disclosure. The visual representation 300 may include a set of predefined icons 302A, 302B, 302C (hereinafter, collectively also referred to as set of predefined icons 302), each icon of the set of predefined icons 302 indicative of a range of charging rates of the battery. For example, as shown in FIG. 3A, the first visual representation 300 may include a set of three icons - a Red color icon (represented by R) 302A, a Amber color icon (represented by Y) 302B, and a Green color icon (represented by G) 302C, similar to a traffic light. The Red color icon (R) 302A may be indicative of a range of low charging rates, the Amber color icon (A) 302B may be indicative of a range of medium charging rates, and the Green color icon (G) 302C may be indicative of a range of high charging rates of the battery. The Red color icon (R) 302A may be indicative of a high SoC and a low temperature, and therefore, suggest to the user that it may be the least optimum time to charge the electric vehicle. The Amber color icon (A) 302B may be indicative of a medium SoC and a medium temperature, and therefore, suggest to the user that it may not be the most optimum time to charge the electric vehicle, but at the same time not the least optimum time to charge the electric vehicle. The Green color icon (G) 302C may be indicative of a low SoC and a high temperature, and therefore, suggest to the user that that it may be an optimum time to charge the electric vehicle.

Referring now to **FIG. 4** a visual representation 400 depicting the predefined SoC of the cells of the battery is illustrated, in accordance with some embodiments of the present disclosure. As mentioned above, in addition to the visual representation 300 indicative of the predicted charging rate of the battery at the future point-in-time, the visual representation rendering module 210 may render the visual representation 400 indicative of the predefined SoC. For example, as shown in FIG. 4, the visual representation 400 may include one or more blocks 402, the number of the blocks 402 rendered being representative of the extent of the SoC of the battery at the future point-in-time. As such, in the FIG. 4, rendering of four blocks 402 may represent a high SoC and rendering of one or no blocks 402 may represent a low SoC.

**FIG. 5** illustrates a visual representation 500 depicting the predefined temperature of the cells of the battery, in accordance with some embodiments of the present disclosure. As mentioned above, in addition to the visual representation 300 indicative of the predicted charging rate of the battery at the future point-in-time, the visual representation rendering module 210 may render the visual representation 500 indicative of the predefined temperature. For example, as shown in FIG. 5, the visual representation 500 may include a bar 502, the height of the bar rendered being representative of the temperature of the cells of the battery at the future point-in-time. As such, a taller bar 502 may represent a higher temperature and a shorter bar 502 may represent a lower temperature of the cells of the battery.

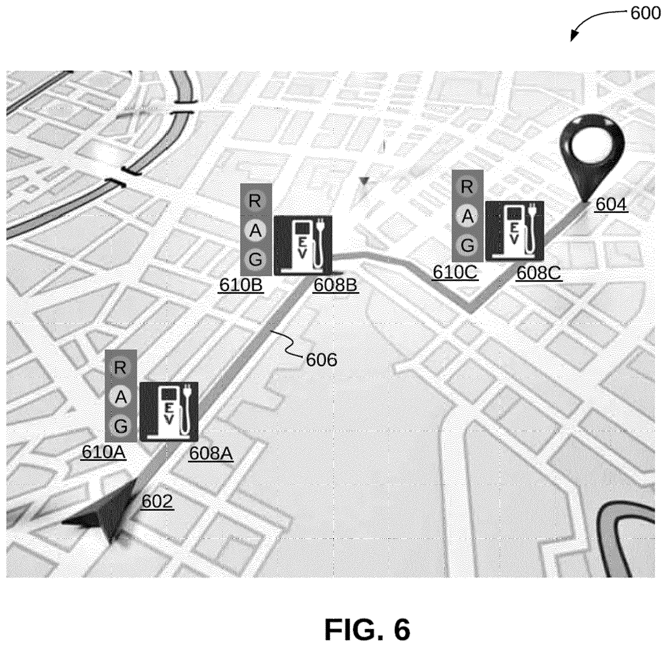

Referring now to **FIG. 6**, a schematic diagram of a navigation map 600 (as rendered on a display screen of the electric vehicle) along with visual representations depicting the predicted charging rate of the cells of the battery is illustrated, in accordance with some embodiments. For example, the navigation map 600 may be generated based on a current location 602 and a predefined destination location 604 of the electric vehicle. Accordingly, a route 606 may be generated and rendered on the display screen. The navigation map 600 may be generated by and fetched from the navigation module pre-installed in the electric vehicle. The navigation map 600 may further include one or more charging stations 608A, 608B, 608C (collectively also referred to as one or more charging stations 608) which may be occurring on the route 606, i.e. between the current location 602 and the predefined destination location 604 of the electric vehicle.

In some embodiments, the visual representation rendering module 210 may render the visual representations 610A, 610B, 610C (corresponding to the visual representation 300) indicative of the predicted charging rates associated with the one or more charging stations 608A, 608B, 608C, respectively. As such, the visual representation 610A may represent the predicted charging rate associated with the charging station 608A, the visual representation 610B may represent the predicted charging rate associated with the charging station 608B, and the visual representation 610C may represent the predicted charging rate associated with the charging station 608C. Therefore, the visual representations 610A, 610B, 610C may provide the user (e.g. the driver) with an indication as to which of the one or more charging stations 608A, 608B, 608C may provide the most optimum charging for the electric vehicle, and therefore help the user in deciding as to at which charging station (e.g. the charging station for which the Green color icon is rendered) to step at for charging the electric vehicle.

Referring back to FIG. 2, the future point-in-time may be determined based on a future location of the vehicle, for example, the location of a charging station existing on the route of the vehicle from the current location to the destination location. To this end, as mentioned above, the location obtaining module 212 may obtain the location associated with each of one or more charging stations located in the vicinity of a current location of the electric vehicle. The location may be fetched from the navigation system of the vehicle. Further, the future point-in-time of arrival estimating module 214 may estimate the future point-in-time of arrival of the electric vehicle at each of the one or more charging stations from the current location. The charging rate predicting module 208 may therefore predict a charging rate of the battery at the future point-in-time of arrival of the electric vehicle at each of the one or more charging points from the current location. The charging rate predicting module 208 may further select a charging station from the one or more charging stations for charging the electric vehicle, based on the predicted charging rate of the battery associated with the one or more charging stations. As such, the charging station selection device 102 may provide an indication to the user about a charging station most suited for rapid charging of the vehicle.

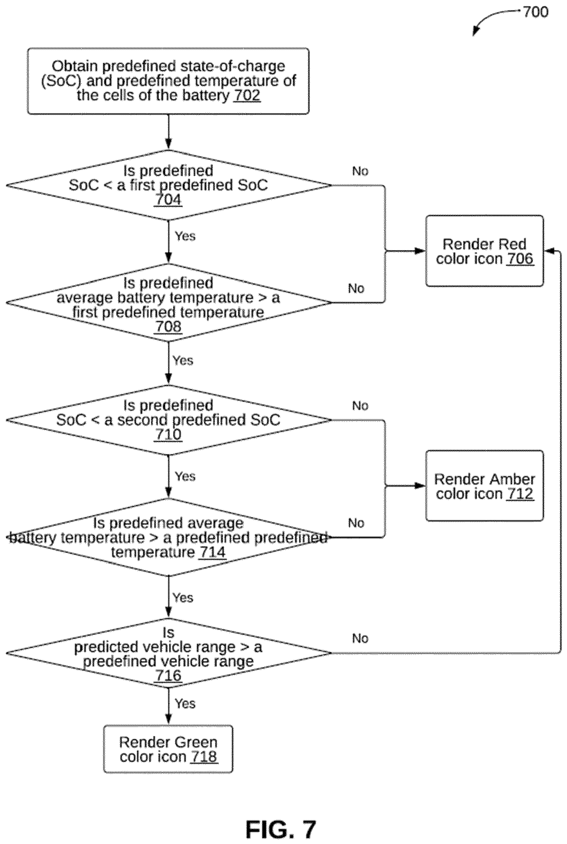

Further, in some embodiments, the navigation data receiving module 216 may receive navigation data associated with a pre-configured destination. Further, the navigation data receiving module 216 may estimate a plurality of future points-in-time of arrival of the electric vehicle at each of a plurality of intermediary locations enroute the pre-configured destination. The charging rate predicting module 208 may then predict a charging rate of the battery at each of the future points-in-time of arrival of the electric vehicle. The navigation data receiving module 216 may then select a set of intermediary locations from the plurality of intermediary locations associated with a set of future points-in-time of arrival from the plurality of future points-in-time of arrival, respectively. A charging rate corresponding to the set of future points-in-time of arrival should be more than a predetermined charging rate. As such, a zone comprising the set of intermediary locations in which the charging rates are found to be the highest may be selected. Referring now to **FIG. 7**, a flowchart of a method 700 of optimizing charging of an electric vehicle is illustrated, in accordance with some embodiments. The method 700 may be performed by the charging station selection device 102, as described above.

At step 702, a predefined temperature of the cells of the battery (i.e. first data set associated with temperature of cells of a battery of the electric vehicle) and a predefined state-of-charge (SoC) of the cells of the battery (i.e. second data set associated with SoC of the cells of the battery of the electric vehicle) may be obtained. It should be noted that the above predefined temperature and the predefined SoC of the battery may be associated either with a current point-in-time or a future point-in-time. Further, as mentioned above, the predefined temperature may be obtained from the BMS of the vehicle and the predefined SoC may be obtained from the BMS or the PCM of the vehicle.

At step 704, a check may be performed to determine whether the predefined SoC is less than a first predefined SoC or not. The first predefined SoC may be associated with a higher value of a range for which an Amber color notification may be generated. For example, assuming that the Amber color notification may be generated for the SoC value ranging from 40% to 20%, then the first predefined SoC may be the 40% value. If, at step 704, it is determined that the predefined SoC is not less than the first predefined SoC, then the method 700 may proceed to step 706 ("No" path), at which the Red color icon may be rendered. If at step 704, it is determined that the predefined SoC is less than the first predefined SoC, then the method 700 may proceed to step 708 ("Yes" path).

At step 708, a check may be performed to determine whether the predefined temperature is greater than a first predefined temperature or not. The first predefined temperature may be associated with a lower temperature value of a range for which an Amber color notification may be generated. For example, assuming that the Amber color notification may be generated for the temperature value ranging from 20 °C to 30 °C, then the first predefined SoC may be the 20 °C value. If, at step 708, it is determined that the predefined temperature is not greater than the first predefined SoC, then the method 700 may proceed to step 706 ("No" path), at which the Red color icon may be rendered. In other words, unless both the conditions of the predefined SoC being less than the first predefined SoC and the predefined temperature being greater than the first predefined temperature value are met, the Red color icon may be rendered. If at step 708, it is determined that the predefined temperature is greater than the first predefined temperature, then the method 700 may proceed to step 710 ("Yes" path).

At step 710, a check may be performed to determine whether the predefined SoC is less than a second predefined SoC or not. The second predefined SoC may be associated with a higher value of a range for which a Green color notification may be generated. For example, assuming that the Green color notification may be generated for the SoC value ranging from 20% to 10%, then the first predefined SoC may be the 20% value. If, at step 710, it is determined that the predefined SoC is not less than the second predefined SoC, then the method 700 may proceed to step 712 ("No" path), at which the Amber color icon may be rendered. If at step 710, it is determined that the predefined SoC is less than the second predefined SoC, then the method 700 may proceed to step 714 ("Yes" path).

At step 714, a check may be performed to determine whether the predefined temperature is greater than a second predefined temperature or not. The second predefined temperature may be associated with a lower temperature value of a range for which the Green color notification may be generated. For example, assuming that the Green color notification may be generated for the temperature value ranging from 30 °C to 40 °C, then the first predefined SoC may be the 30 °C value. If, at step 714, it is determined that the predefined temperature is not greater than the second predefined SoC, then the method 700 may proceed to step 712 ("No" path), at which the Amber color icon may be rendered. If at step 714, it is determined that the predicted temperature is greater than the first predefined temperature, then the method 700 may proceed to step 716 ("Yes" path).

At step 716, optionally, for a potential charging station at a future point-in-time, a check is performed to determine whether a predicted range of the vehicle is greater than a distance of the vehicle from the current location to the location of the charging station. If at step 716, it is determined that the predicted range of the vehicle is not greater than the said distance, then the method 700 may proceed to step 706, at which the Red color notification may be generated. In other words, when the predicted range of the vehicle is lesser than the vehicle distance from the charging station, it is not recommended for the vehicle to wait for charging at the said charging station, since the vehicle may run out of battery charge before reaching the said charging station, and such charging station must not be highlighted as an option for the user. Therefore, charging the vehicle at such charging station is not an optimum solution, and hence not advisable.

However, if at step 716, it is determined that the predicted range of the vehicle is greater than the said distance, then the method 700 may proceed to step 718. At step 718, the Green color icon may be rendered. In other words, the Green color notification may be generated only when the conditions of the predefined SoC being less than the second predefined SoC, the predefined temperature being greater than the second predefined temperature value, and the predicted range of the vehicle being greater than the vehicle distance are met.

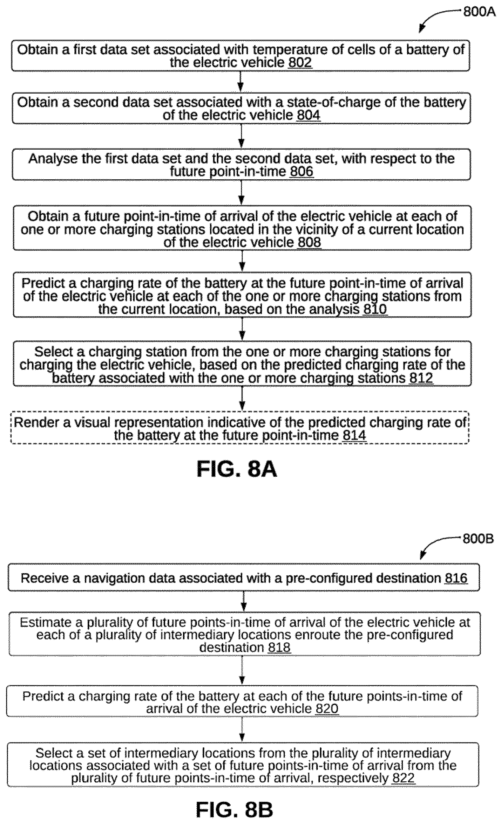

Referring now to **FIG. 8A**, a flowchart of a method 800A of selecting a charging station for charging an electric vehicle is illustrated, in accordance with some embodiments. The method 800A may be performed by the charging station selection device 102, as described above. The method 800A may be suitable for a navigation-based vehicle, for charging the vehicle at a future point-in-time.

At step 802, a first data set associated with temperature of cells of the battery of the electric vehicle may be obtained. The first data set may include a predefined temperature of the cells of the battery for a future point-in-time. For example, the future point-in-time may correspond to a time of arrival at a rapid charging station, based on a location of the rapid charging station according to the navigation system. As described in conjunction with FIG. 6, one or more charging stations may be located in the vicinity of a current location of the electric vehicle. As such, a location associated with each of the one or more charging stations located in the vicinity of a current location of the electric vehicle may be obtained. Further, a future point-in-time of arrival of the electric vehicle at each of the one or more charging stations from the current location may be estimated.

At step 804, a second data set associated with a state-of-charge (SoC) of the battery of the electric vehicle may be obtained. The second data set may include a predefined SoC of the cells of the battery for the future point-in-time. At step 806, the first data set and the second data set may be analyzed, with respect to the future point-in-time.

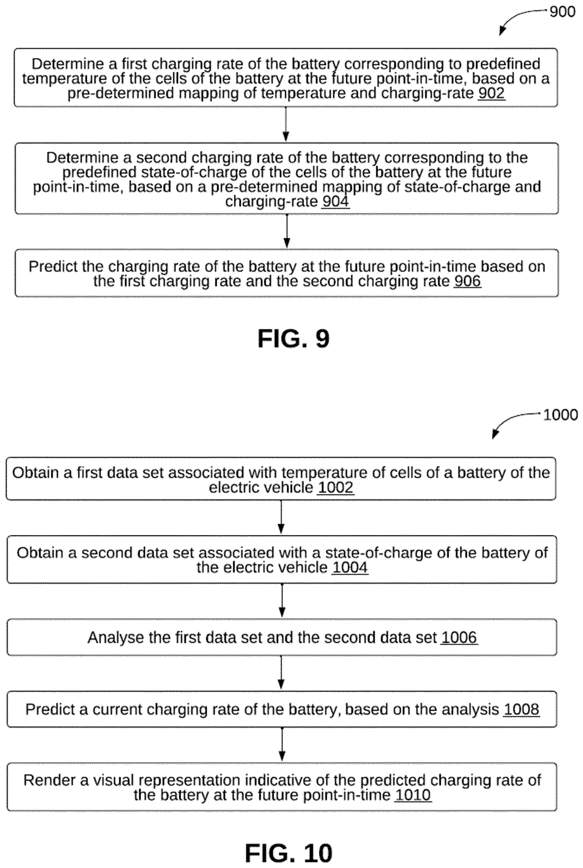

At step 808, a future point-in-time of arrival of the electric vehicle at each of one or more charging stations located in the vicinity of a current location of the electric vehicle may be obtained. At step 810, a charging rate of the battery at the future point-in-time of arrival of the electric vehicle at each of the one or more charging stations from the current location may be predicted, based on the analysis. In other words, a charging rate of the battery at the future point-in-time of arrival of the electric vehicle at each of the one or more charging stations from the current location may be predicted. The step 810 of predicting the charging rate of the battery at the future point-in-time is explained in further detail, in conjunction with FIG. 9.

Referring now to **FIG. 9**, a flowchart of a method 900 of predicting the charging rate of the battery at the future point-in-time is illustrated, in accordance with some embodiments.

At step 902, a first charging rate of the battery may be determined corresponding to the predefined temperature of the cells of the battery at the future point-in-time, based on a pre-determined mapping of temperature and charging-rate. As mentioned above, the charging rate of the battery of the vehicle may be directly related to the temperature of the cells of the battery at that point-in-time. As such, a relation between the charging rate and the temperature of the cells of the battery may be predefined. For example, it is generally observed that for a consistent start cell temperature, the charging rate is fastest in the range of 10% - 40% SoC, and drops significantly at SoC of 80% or higher. Further, the charging rate is strongly influenced by the battery cell temperature. Accordingly, by using the predefined temperature of the battery at that point-in-time in the future, the first charging rate of the battery may be determined.

At step 904, a second charging rate of the battery may be determined corresponding to the predefined state-of-charge of the cells of the battery at the future point-in-time, based on a pre-determined mapping of state-of-charge and charging-rate. Similar to the temperature, the charging rate of the battery of the vehicle may be directly related to the SoC of the cells of the battery at that point-in-time. A relation between the charging rate and the SoC of the cells of the battery may be predefined. Accordingly, by using the predefined SoC of the battery at that point-in-time in the future, the first second rate of the battery may be determined.

At step 906, the charging rate of the battery at the future point-in-time may be determined based on the first charging rate and the second charging rate. The first charging rate and the second charging rate may be correlated to the determine the charging rate of the battery at the future point-in-time.

Referring back to FIG. 8A, at step 812, a charging station may be selected from the one or more charging stations for charging the electric vehicle, based on the predicted charging rate of the battery associated with the one or more charging stations. For example, the selected charging station may be one that offers the highest charging rate among the one or charging stations. At step 814, a visual representation indicative of the predicted charging rate of the battery at the future point-in-time of arrival of the electric vehicle at each of the one or more charging stations from the current location may be rendered on a display device, for example, the display device of an infotainment system of the vehicle. By way of an example, and as illustrated in FIG. 3, rendering the visual representation may include displaying an icon from a set of predefined icons 302. Each icon of the set of predefined icons may be indicative of a range of charging rates of the battery. Further, each icon of the set of predefined icons 302 may include a unique associated color, i.e. the Red color icon 302A, the Amber color icon 302B, and the Green color icon 302C.

Referring now to **FIG. 8B**, a flowchart of a method 800B of selecting a charging station for charging an electric vehicle is illustrated, in accordance with some embodiments. The method 800B may be suitable for a navigation-based vehicle, for charging the vehicle at a future point-in-time. In some embodiments, based on the navigation data of the vehicle, an optimum charging zone may be determined within which the optimum charging of the vehicle is possible. To this end, at step 816, a navigation data associated with a pre-configured destination may be obtained. The navigation data may include a route for the vehicle from the current location to the pre-configured destination location. The navigation data may be obtained from the navigation module pre-installed in the vehicle.

At step 818, a plurality of future points-in-time of arrival of the electric vehicle at each of a plurality of intermediary locations enroute the pre-configured destination may be estimated. It should be noted that the intermediary locations may be defined automatically, based on regular time intervals or intermediate distance. In particular, for the estimated time of travel from the current location to the destination location, multiple intermediary locations may be defined corresponding to a fixed time interval. For example, when the estimated time of travel from the current location to the destination location is one hour, six intermediary locations may be defined corresponding to a fixed time interval of 10 minutes. In a similar manner, multiple intermediary locations may be defined corresponding to a fixed intermediate distance. For example, when the estimated distance between current location and the destination location is 100 kilometers, ten intermediary locations may be defined corresponding to a fixed intermediate distance of 10 kilometers.

Once the plurality of intermediary locations enroute the pre-configured destination are defined and the future points-in-time of arrival of the electric vehicle at each of the plurality of intermediary locations are estimated, a charging rate of the battery at each of the future points-in-time of arrival of the electric vehicle may be predicted, at step 820 (corresponding to step 810).

At step 822, a set of intermediary locations may be selected from the plurality of intermediary locations associated with a set of future points-in-time of arrival from the plurality of future points-in-time of arrival, respectively. A charging rate corresponding to the set of future points-in-time of arrival may be more than a predetermined charging rate. In other words, the zone in which the charging rates are found to be the highest may be selected. The zone, i.e. the set of intermediary locations (as selected) may be rendered on the display screen, to indicate to the user that that it may be an optimum time to charge the vehicle while driving through the said zone.

Referring now to **FIG. 10**, a flowchart of a method 1000 of selecting a charging station for charging an electric vehicle is illustrated, in accordance with some embodiments. The method 1000 may be performed by the charging station selection device 102, as described above. The method 1000 may be suitable for charging the vehicle at a current point-in-time.

At step 1002, a first data set associated with temperature of cells of the battery of the electric vehicle may be obtained. The first data set may include a current temperature of the cells of the battery. At step 1004, a second data set associated with a state-of-charge (SoC) of the battery of the electric vehicle may be obtained. The second data set may include a current SoC of the cells of the battery.

At step 1006, the first data set and the second data set may be analyzed. At step 1008, a current charging rate of the battery may be predicted, based on the analysis. The current charging rate may, therefore, provide an indication to the user as to whether it is an optimum time to charge the vehicle or not. At step 1010, a visual representation indicative of the predicted charging rate of the battery at the current point-in-time may be rendered.

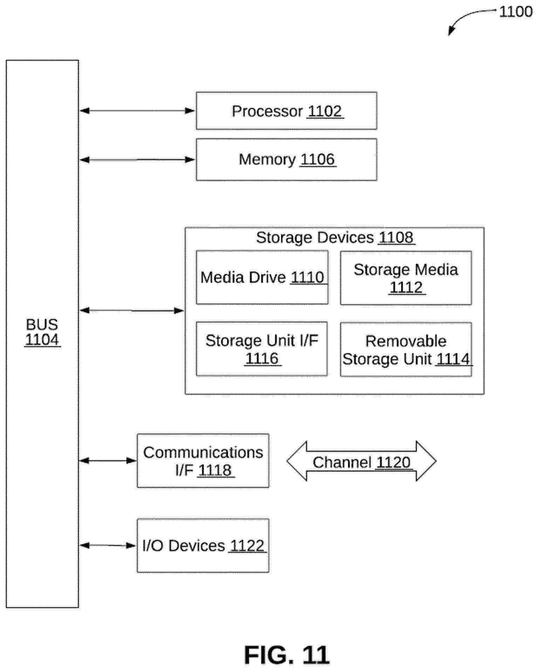

Referring now to **FIG. 11**, an exemplary computing system 1100 that may be employed to implement processing functionality for various embodiments (e.g., as a SIMD device, client device, server device, one or more processors, or the like) is illustrated. Those skilled in the relevant art will also recognize how to implement the invention using other computer systems or architectures. The computing system 1100 may represent, for example, a user device such as a desktop, a laptop, a mobile phone, personal entertainment device, DVR, and so on, or any other type of special or general-purpose computing device as may be desirable or appropriate for a given application or environment. The computing system 1100 may include one or more processors, such as a processor 1102 that may be implemented using a general or special purpose processing engine such as, for example, a microprocessor, microcontroller or other control logic. In this example, the processor 1102 is connected to a bus 1104 or other communication media. In some embodiments, the processor 1102 may be an Artificial Intelligence (AI) processor, which may be implemented as a Tensor Processing Unit (TPU), or a graphical processor unit, or a custom programmable solution Field-Programmable Gate Array (FPGA).

The computing system 1100 may also include a memory 1106 (main memory), for example, Random Access Memory (RAM) or other dynamic memory, for storing information and instructions to be executed by the processor 1102. The memory 1106 also may be used for storing temporary variables or other intermediate information during the execution of instructions to be executed by processor 1102. The computing system 1100 may likewise include a read-only memory ("ROM") or other static storage device coupled to bus 1104 for storing static information and instructions for the processor 1102.

The computing system 1100 may also include storage devices 1108, which may include, for example, a media drive 1110 and a removable storage interface. The media drive 1110 may include a drive or other mechanism to support fixed or removable storage media, such as a hard disk drive, a floppy disk drive, a magnetic tape drive, an SD card port, a USB port, a micro-USB, an optical disk drive, a CD or DVD drive (R or RW), or other removable or fixed media drive. A storage media 1112 may include, for example, a hard disk, magnetic tape, flash drive, or other fixed or removable media that is read by and written to by the media drive 1110. As these examples illustrate, the storage media 1112 may include a computer-readable storage medium having stored therein particular computer software or data.

In alternative embodiments, the storage devices 1108 may include other similar instrumentalities for allowing computer programs or other instructions or data to be loaded into the computing system 1100. Such instrumentalities may include, for example, a removable storage unit 1114 and a storage unit interface 1116, such as a program cartridge and cartridge interface, a removable memory (for example, a flash memory or other removable memory module) and memory slot, and other removable storage units and interfaces that allow software and data to be transferred from the removable storage unit 1114 to the computing system 1100.

The computing system 1100 may also include a communications interface 1118. The communications interface 1118 may be used to allow software and data to be transferred between the computing system 1100 and external devices. Examples of the communications interface 1118 may include a network interface (such as an Ethernet or other NIC card), a communications port (such as for example, a USB port, a micro-USB port), Near field Communication (NFC), etc. Software and data transferred via the communications interface 1118 are in the form of signals which may be electronic, electromagnetic, optical, or other signals capable of being received by the communications interface 1118. These signals are provided to the communications interface 1118 via a channel 1120. The channel 1120 may carry signals and may be implemented using a wireless medium, wire or cable, fiber optics, or other communications medium. Some examples of the channel 1120 may include a phone line, a cellular phone link, an RF link, a Bluetooth link, a network interface, a local or wide area network, and other communications channels.

The computing system 1100 may further include Input/Output (I/O) devices 1122. Examples may include, but are not limited to a display, keypad, microphone, audio speakers, vibrating motor, LED lights, etc. The I/O devices 1122 may receive input from a user and also display an output of the computation performed by the processor 1102. In this document, the terms "computer program product" and "computer-readable medium" may be used generally to refer to media such as, for example, the memory 11011, the storage devices 1108, the removable storage unit 1114, or signal(s) on the channel 1120. These and other forms of computer-readable media may be involved in providing one or more sequences of one or more instructions to the processor 1102 for execution. Such instructions, generally referred to as "computer program code" (which may be grouped in the form of computer programs or other groupings), when executed, enable the computing system 1100 to perform features or functions of embodiments of the present invention.

In an embodiment where the elements are implemented using software, the software may be stored in a computer-readable medium and loaded into the computing system 1100 using, for example, the removable storage unit 1114, the media drive 1110 or the communications interface 1118. The control logic (in this example, software instructions or computer program code), when executed by the processor 1102, causes the processor 1102 to perform the functions of the invention as described herein.

One or more techniques for generating recommendations for enhancement of an existing legacy or monolith application are disclosed. The techniques apply a three-dimensional assessment approach with set of parameters along with certain criteria and corresponding weightages that help to identify the appropriate recommendations for the new functionality enhancements in legacy or monolith Brownfield applications. The three-dimensional (i.e., application assessment, business assessment, and risk assessment) approach helps to perform deep analysis and understand the existing Brownfield from application, business and risk perspectives. Further, the techniques are able to derive concrete decisions from business perspective thus ensures the stability of new functionalities, quick time-to-market, and reduce cost and time, along with providing maximum return-on-investment.

It is intended that the disclosure and examples be considered as exemplary only, with a true scope and spirit of disclosed embodiments being indicated by the following claims.

## Claims

1. A method of selecting a charging station for charging an electric vehicle, the method comprising:
obtaining, by a processor, a first data set associated with temperature of cells of a battery of the electric vehicle, wherein the first data set comprises:
a predefined temperature of the cells of the battery for a future point-in-time;
obtaining, by the processor, a second data set associated with a state-of-charge of the battery of the electric vehicle, wherein the second data set comprises:
a predefined state-of-charge of the cells of the battery for the future point-in-time;
analyzing, by the processor, the first data set and the second data set, with respect to the future point-in-time;
obtaining, by the processor, a future point-in-time of arrival of the electric vehicle at each of one or more charging stations located in the vicinity of a current location of the electric vehicle;
predicting, by the processor, a charging rate of the battery at the future point-in-time of arrival of the electric vehicle at each of the one or more charging stations from the current location, based on the analysis; and
selecting, by the processor, a charging station from the one or more charging stations for charging the electric vehicle, based on the predicted charging rate of the battery associated with the one or more charging stations.

2. The method as claimed in claim 1 wherein obtaining the future point-in-time of arrival of the electric vehicle at each of one or more charging stations comprises:
obtaining a location associated with each of the one or more charging stations located in the vicinity of a current location of the electric vehicle, from navigation data; and
estimating the future point-in-time of arrival of the electric vehicle at each of the one or more charging stations from the current location, based on the location associated with each of the one or more charging stations.

3. The method as claimed in claim 1, wherein predicting the charging rate of the battery at the future point-in-time comprises:
determining a first charging rate of the battery corresponding to the predefined temperature of the cells of the battery at the future point-in-time, based on a predetermined mapping of temperature and charging-rate;
determining a second charging rate of the battery corresponding to the predefined state-of-charge of the cells of the battery at the future point-in-time, based on a pre-determined mapping of state-of-charge and charging-rate; and
predicting the charging rate of the battery at the future point-in-time based on the first charging rate and the second charging rate.

4. The method as claimed in claim 1, further comprising:
rendering a visual representation indicative of the predicted charging rate of the battery at the future point-in-time of arrival of the electric vehicle at each of the one or more charging stations from the current location, based on the analysis.

5. The method as claimed in claim 4, wherein rendering the visual representation comprises:
displaying an icon from a set of predefined icons, wherein each icon of the set of predefined icons is indicative of a range of charging rates of the battery.

6. The method as claimed in claim 5, wherein each icon of the set of predefined icons comprises a unique associated colour.

7. The method as claimed in claim 1, further comprising:
receiving a navigation data associated with a pre-configured destination;
estimating a plurality of future points-in-time of arrival of the electric vehicle at each of a plurality of intermediary locations enroute the pre-configured destination;
predicting a charging rate of the battery at each of the future points-in-time of arrival of the electric vehicle; and
selecting a set of intermediary locations from the plurality of intermediary locations associated with a set of future points-in-time of arrival from the plurality of future points-in-time of arrival, respectively, wherein a charging rate corresponding to the set of future points-in-time of arrival is more than a predetermined charging rate.

8. A method of optimizing charging of an electric vehicle, the method comprising:
obtaining, by a processor, a first data set associated with temperature of cells of a battery of the electric vehicle, wherein the first data set comprises:
a current temperature of the cells of the battery;
obtaining, by the processor, a second data set associated with a state-of-charge of the battery of the electric vehicle, wherein the second data set comprises:
a current state-of-charge of the cells of the battery;
analyzing, by the processor, the first data set and the second data set;
predicting, by the processor, a current charging rate of the battery, based on the analysis; and
rendering, by the processor, a visual representation indicative of the predicted charging rate of the battery.

9. A system for selecting a charging station for charging an electric vehicle, the system comprising:
a processor; and
a memory coupled with the processor, wherein the memory stores processor-executable instructions which, upon execution, cause the processor to:
obtain a first data set associated with temperature of cells of a battery of the electric vehicle, wherein the first data set comprises:
a predefined temperature of the cells of the battery for a future point-in-time;
obtain a second data set associated with a state-of-charge of the battery of the electric vehicle, wherein the second data set comprises:
a predefined state-of-charge of the cells of the battery for the future point-in-time;
analyze the first data set and the second data set, with respect to the future point-in-time;
obtain a future point-in-time of arrival of the electric vehicle at each of one or more charging stations located in the vicinity of a current location of the electric vehicle;
predict a charging rate of the battery at the future point-in-time of arrival of the electric vehicle at each of the one or more charging stations from the current location, based on the analysis; and
selecting a charging station from the one or more charging stations for charging the electric vehicle, based on the predicted charging rate of the battery associated with the one or more charging stations.

10. The system as claimed in claim 9, wherein the processor-executable instructions, upon execution, further cause the processor to:
render a visual representation indicative of the predicted charging rate of the battery at the future point-in-time of arrival of the electric vehicle at each of the one or more charging stations from the current location, based on the analysis, wherein rendering the visual representation comprises:
displaying an icon from a set of predefined icons, wherein each icon of the set of predefined icons is indicative of a range of charging rates of the battery, wherein each icon of the set of predefined icons comprises a unique associated color.

11. The system as claimed in claim 9, wherein the processor-executable instructions, upon execution, further cause the processor to:
receive a navigation data associated with a pre-configured destination;
estimate a plurality of future points-in-time of arrival of the electric vehicle at each of a plurality of intermediary locations enroute the pre-configured destination;
predict a charging rate of the battery at each of the future points-in-time of arrival of the electric vehicle; and
select a set of intermediary locations from the plurality of intermediary locations associated with a set of future points-in-time of arrival from the plurality of future points-in-time of arrival, respectively, wherein a charging rate corresponding to the set of future points-in-time of arrival is more than a predetermined charging rate.
